**Europäisches Patentamt**

**European Patent Office**

**Office européen des brevets**

(19)

(11) Veröffentlichungsnummer : **0 113 111**
**B1**

(12) # EUROPÄISCHE PATENTSCHRIFT

(45) Veröffentlichungstag der Patentschrift :
22.02.89

(21) Anmeldenummer : 83113062.0

(22) Anmeldetag : 23.12.83

(51) Int. Cl.⁴ : **B 60 S   1/28**

(54) **Wischvorrichtung an Kraftfahrzeugen.**

(30) Priorität : 30.12.82 DE 3248569

(43) Veröffentlichungstag der Anmeldung :
11.07.84 Patentblatt 84/28

(45) Bekanntmachung des Hinweises auf die Patenterteilung : 22.02.89 Patentblatt 89/08

(84) Benannte Vertragsstaaten :
DE FR GB IT SE

(56) Entgegenhaltungen :
EP—A— 0 012 636

(73) Patentinhaber : **BAYERISCHE MOTOREN WERKE**
**Aktiengesellschaft**
**Postfach 40 02 40 Petuelring 130 - AJ-36**
**D-8000 München 40 (DE)**

(72) Erfinder : **Hartmann, Norbert**
**Wotanstrasse 8**
**D-8034 Germering (DE)**

(74) Vertreter : **Bullwein, Fritz**
**Bayerische Motoren Werke Aktiengesellschaft Postfach 40 02 40 Petuelring 130 AJ-33**
**D-8000 München 40 (DE)**

## Beschreibung

Die Erfindung bezieht sich auf eine Wischvorrichtung für zwei benachbarte Abdeckflächen an Kraftfahrzeugen, mit zwei den Flächen jeweils zugeordneten Wischblättern, wobei eine Hohlwelle und eine in die Hohlwelle aufgenommene Kernwelle je eines der Wischblätter tragen und über einen gemeinsamen Motor getrieben und um unterschiedliche Winkel verschwenkbar sind.

Derartige Wischvorrichtungen dienen insbesondere dazu, die Streuscheiben von Scheinwerfern unterschiedlicher Größe zu reinigen. Aus der EP-A 0 012 636 ist eine Wischvorrichtung der eingangs genannten Art bekannt. Die unterschiedlichen Schwenkwinkel ergeben sich durch den unterschiedlichen Antrieb der beiden Wischblätter. Während das eine Wischblatt mit der Kernwelle starr gekoppelt ist, ist für das andere Wischblatt lediglich ein auf der zugehörigen Welle befestigter Mitnehmer vorgesehen. Von den beiden Umkehrlagen des zugehörigen Wischblatts aus gesehen, macht der Mitnehmer zunächst einen der Differenz der beiden Schwenkwinkel entsprechenden Leerweg und trifft dann während seiner Bewegung auf den Wischarm dieses anderen Wischblatts. Das andere Wischblatt wird somit praktisch schlagartig aus der Ruhelage auf die Bewegungsgeschwindigkeit des einen Wischblatts beschleunigt. Die bekannte Wischvorrichtung ist daher besonders verschleißanfällig, da für die abrupte Beschleunigung des anderen Wischblatts erhebliche Kräfte aufzubringen bzw. entsprechende Gegenkräfte abzufangen sind.

Der Erfindung liegt die Aufgabe zugrunde, eine Wischvorrichtung der eingangs genannten Art zu schaffen, bei der der Antrieb der beiden Wischblätter nahezu verschleißfrei erfolgt.

Die Erfindung löst diese Aufgabe durch die kennzeichnenden Merkmale des Patentanspruchs 1. Durch die gleichförmige Bewegung der beiden Wischblätter werden kurzzeitig auftretende Kräfte erheblicher Größe vermieden. Beide Wischblätter unterliegen nahzu denselben gleichmäßig einwirkenden Antriebskräften. Zudem ergeben sich aus der gleichförmigen Bewegung der beiden Wischblätter vielfältige Realisierungsmöglichkeiten, da neben der gleichsinnigen auch eine gegensinnige Bewegung der beiden Wischblätter möglich ist.

Diese Bewegung kann auf unterschiedliche Weise erreicht werden. So ist es beispielsweise möglich, den Antrieb der Hohl- und der Kernwelle über Zahnräderpaare mit unterschiedlichem Übersetzungsverhältnis vorzunehmen. Anstelle eines vom Motor angetriebenen Zahnrads kann auch ein Treibriemen verwendet werden.

Demgegenüber besteht eine konstruktiv vorteilhafte Lösung darin, daß der Antrieb von Hohl- und Kernwelle über zwei Kniehebel erfolgt, deren eines Ende mit je einem der beiden Wellen starr verbunden ist und deren anderes Ende gelenkig auf einem vom Motor angetriebenen Schwenkhebel sitzt. Derartige Kniehebel sind verschleißarm und ermöglichen ebenfalls eine Anpassung der Schwenkwinkel der beiden Wischblätter an die jeweiligen Gegebenheiten.

Dabei können die Kniehebel unterschiedliche Schenkel besitzen. Der Antrieb der beiden Kniehebel kann dann beispielsweise von einem gemeinsamen, durch den Motor bewegten Zentrum aus erfolgen.

Bei einer derartigen Antriebsform läßt sich eine besonders gedrängte Bauweise dadurch erreichen, daß der Schwenkhebel für beide Kniehebel denselben Hebelarm besitzt und die beiden Kniehebel symmetrisch bezüglich der Achse des Motors angelenkt sind.

In der Zeichnung ist ein Ausführungsbeispiel der Erfindung dargestellt. Dabei zeigt

Fig. 1 den Antrieb für eine Wischvorrichtung mit zwei um unterschiedliche Winkel schwenkbare Wischblätter an Kraftfahrzeugen und

Fig. 2 einen Schnitt längs der Linie II-II in Fig. 1.

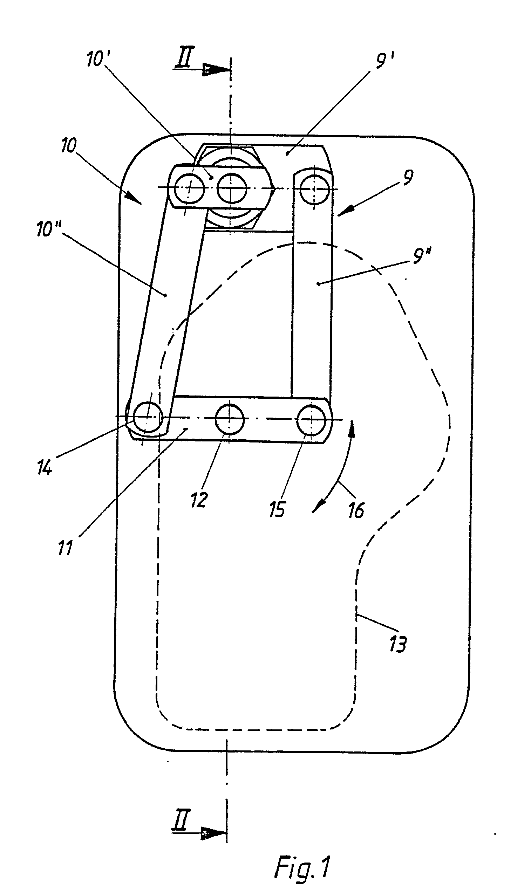

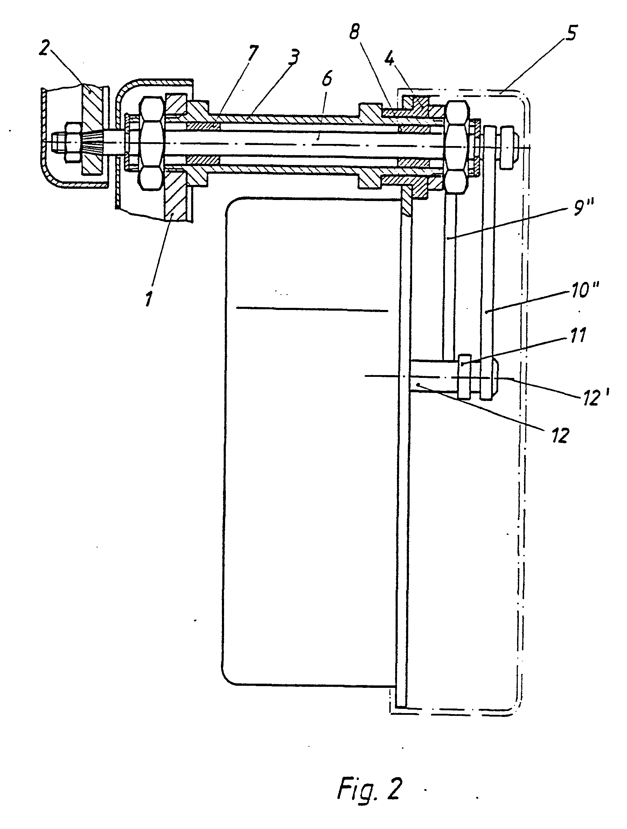

Die in Fig. 1 und Fig. 2 gezeigte Vorrichtung dient dazu zwei nicht dargestellte Wischblätter für unterschiedlich große Abdeckscheiben von Kraftfahrzeug-Scheinwerfern vollständig bzw. nahezu vollständig zu überstreichen. Hierzu werden zwei die Wischblätter tragende Wischarme 1 und 2 um unterschiedliche Winkel verschwenkt. Der Wischarm 1 ist auf einer Hohlwelle 3 befestigt, die über ein Gleitlager 4 in einem Gehäuse 5 gehalten ist. Der Wischarm 2 sitzt auf einer Kernwelle 6, die innerhalb der Hohlwelle 3 in zwei Gleitlagern 7 und 8 geführt ist.

An der Hohlwelle 3 bzw. der Kernwelle 6 greifen Kniehebel 9 bzw. 10 an, deren Schenkel 9' und 9" bzw. 10' und 10" unterschiedliche Längen besitzen. Die Kniehebel 9 und 10 sind an einem Schwenkhebel 11 angelenkt, der auf der Ausgangswelle 12 eines Elektromotors 13 befestigt ist. Die Anlenkpunkte 14 und 15 der Kniehebel 9 und 10 besitzen denselben Abstand von der Achse 12' der Ausgangswelle 12.

Ausgehend von einer in Fig. 1 dargestellten Endlage, wird der Schwenkhebel 11 um einen Winkel (Pfeil 16) verschwenkt und wieder in die Ausgangslage zurückgeführt. Die Kniehebel 9 bzw. 10 und die daran befestigten Wellen 3 und 6 werden während der hin- und zurückführenden Schwenkbewegung gleichförmig und hier auch gleichsinnig bewegt. Aufgrund der unterschiedlichen geometrischen Ausbildung der beiden Schwenkhebel 9 und 10 ergeben sich unterschiedliche Schwenkwinkel für die beiden Wellen 3 und 6 und damit für die Wischarme 1 und 2. Damit können an den Wischarmen 1 und 2 befestigte Wischblätter für Scheinwerfer unterschiedlicher Größe über die gesamte Streuscheibe der Scheinwerfer hin- und herbewegt werden. Da der Antrieb der beiden Wischarme 1 und 2, von Lagertoleranzen abgesehen, spielfrei erfolgt, unterliegt der gesamte in der Zeichnung dargestellte Antriebsmechanismus für die beiden Wischarme keinem besonderen Verschleiß.

**Patentansprüche**

1. Wischvorrichtung für zwei benachbarte Abdeckflächen an Kraftfahrzeugen, mit zwei den Flächen jeweils zugeordneten Wischblättern, wobei eine Hohlwelle (3) und eine in die Hohlwelle (3) aufgenommene Kernwelle (6) je eines der Wischblätter (1, 2) tragen und über einen gemeinsamen Motor (13) getrieben und um unterschiedliche Winkel verschwenkbar sind, dadurch gekennzeichnet, daß die Hohl- und Kernwellen je eines der Wischblätter tragen und stets gleichzeitig und mit unterschiedlichem Übersetzungsverhältnis angetrieben sind.

2. Wischvorrichtung nach Anspruch 1, dadurch gekennzeichnet, daß der Antrieb von Hohl- und Kernwellen (3 bzw. 6) über zwei Kniehebel (9, 10) erfolgt, deren eines Ende mit je einem der beiden Wellen (3 bzw. 6) starr verbunden ist und deren anderes Ende gelenkig auf einem vom Motor (13) angetriebenen Schwenkhebel (11) sitzt.

3. Wischvorrichtung nach Anspruch 2, dadurch gekennzeichnet, daß die Kniehebel (9, 10) unterschiedliche Schenkel (9', 9" ; 10', 10") besitzen.

4. Wischvorrichtung nach Anspruch 3, dadurch gekennzeichnet, daß der Schwenkhebel (11) für beide Kniehebel (9, 10) denselben Hebelarm besitzt und daß die Kniehebel (9, 10) symmetrisch bezüglich der Achse (12') des Motors (13) bzw. dessen Ausgangswelle (12) angelenkt sind.

**Claims**

1. A device for wiping two neighbouring cover surfaces on motor vehicles, comprising two wiper blades associated with the respective surfaces, a hollow shaft (3) and a core shaft (6) received in the hollow shaft (3), each bearing a respective wiper blade (1, 2) and being driven by a common motor (13) and pivotable through different angles, characterised in that the hollow and core shafts each bear one of the wiper blades and are always driven simultaneously and with different transmission ratios.

2. A wiper device according to claim 1, characterised in that the hollow and core shafts (3 and 6) are driven by two toggle levers (9, 10), one end of which is rigidly connected to a respective one of the two shafts (3 and 6) and the other end of which bears pivotably on a pivoted lever (11) driven by the motor (13).

3. A wiper device according to claim 2, characterised in that the toggle levers (9, 10) have limbs (9', 9" ; 10', 10") different from one another.

4. A wiper device according to claim 3, characterised in that the pivoted lever (11) has the same lever arm for both toggle levers (9, 10) and the toggle levers (9, 10) are symmetrically pivoted with respect to the axis (12') or output shaft (12) of the motor (13).

**Revendications**

1. Dispositif d'essuyage pour deux surfaces de recouvrement voisines sur des véhicules automobiles, dispositif comportant deux raclettes d'essuie-glace, chacune respectivement associée à une des surfaces, un arbre creux (3) et un arbre central (6) logé dans cet arbre creux (3) portant chacun une des raclettes d'essuie-glace (1, 2), et étant entraînés par l'intermédiaire d'un moteur commun (13), ces arbres étant susceptibles de pivoter d'un angle différent, dispositif d'essuyage caractérisé en ce que l'arbre creux et l'arbre central portent chacun une des raclettes d'essuyage et sont constamment entraînés simultanément et avec un rapport de transmission différent.

2. Dispositif d'essuyage selon la revendication 1, caractérisé en ce que l'entraînement de l'arbre creux et de l'arbre central (3 ou bien 6) s'effectue par l'intermédiaire de deux leviers brisés (9, 10) dont une extrémité est respectivement solidaire de l'un des deux arbres (3 ou 6), et dont l'autre extrémité est articulée sur un levier oscillant (11) entraîné par le moteur (13).

3. Dispositif d'essuyage selon la revendication 2, caractérisé en ce que les leviers brisés (9, 10) ont des branches (9', 9" ; 10', 10") de longueur différente.

4. Dispositif d'essuyage selon la revendication 3, caractérisé en ce que le levier oscillant (11) a le même bras de levier pour les deux leviers brisés (9, 10), et que les leviers brisés (9, 10) sont articulés de façon symétrique par rapport à l'axe (12') du moteur (3) ou bien de son arbre de sortie (12).

Fig.1

*Fig. 2*